# EUROPÄISCHE PATENTSCHRIFT

(11) **EP 0 376 141 B1**
(45) Veröffentlichungstag und Bekanntmachung des Hinweises auf die Patenterteilung: **31.03.1993**
(21) Anmeldenummer: 89123544.2
(22) Anmeldetag: 20.12.1989
(51) Int. Cl.: B05D 7/24, B01J 19/12

(54) **Verfahren und Vorrichtung zur Kunststoffbeschichtung von Strangprofilen**
Method and apparatus for coating extruded profiles with a polymer layer
Procédé et dispositif pour revêtir des profilés extrudés au moyen d'une matière plastique

(30) Priorität: 21.12.1988 DE 3843098
(43) Veröffentlichungstag der Anmeldung: 04.07.1990
(73) Patentinhaber: Krauss-Maffei Aktiengesellschaft, 80997 München (DE)
(72) Erfinder: Schulz, Stefan, Dr., D-8038 Gröbenzell (DE); Kegel, Berthold H., Dr., D-8011 Kirchheim b.München (DE); Möhl, Wolfgang, Dr., D-8000 München 71 (DE)
(74) Vertreter: Rucker, Bernd, Dipl.-Ing.

(56) Entgegenhaltungen:
- WO-A-86/07391
- DE-A- 3 147 986
- DE-A- 3 244 391

## Beschreibung

Es ist üblich, Strangprofile aus beispielsweise Kunststoff oder Metall, wie sie z. B. im Bauwesen als Fenster- oder Türprofile zur Anwendung kommen, mit einem Kunststoffüberzug zu versehen, beispielsweise durch Lackieren.

Es ist auch bekannt, Bänder kontinuierlich durch eine Plasmabehandlungskammer zu führen, in der durch Hochfrequenz ein Plasma eines Gases erzeugt wird. Derartige bekannte Vorrichtungen werden beispielsweise von Shine-etsu Chemical Industry Co., Ltd./Japan geliefert. Vgl. auch WO 86/07 391. Zur Plasmapolymerisation sei ferner auf die DE-A-31 47 986, DE-A-32 44 391, DE-A-33 16 693 und DE-A-34 08 837 verwiesen.

Bisher war es jedoch noch nicht möglich, Strangprofile, die im Querschnitt Ecken, Kanten oder Vertiefungen, aufweisen, mit einem gleichmäßigen Polymerüberzug zu versehen.

Dazu wird gemäß einer Ausführungsform der Erfindung ein Verfahren zur Kunststoffbeschichtung von Strangprofilen, bei dem man das Strangprofil kontinuierlich durch einen Reaktor führt, in dem ein Monomeres mit Hilfe eines durch Mikrowellen erzeugten Plasmas polymerisiert und auf dem Strangprofil abgeschieden wird, vorgesehen, das insoweit aus der DE-A-31 47 986 bekannt ist, das jedoch darüber hinaus dadurch gekennzeichnet ist, daß man das Strangprofil in dem Reaktor durch ein gürtelförmiges Plasma führt, das man mit Hilfe eines stationären ECR-Magneten ausbildet, der das kontinuierlich bewegte Strangprofil geschlossen umgibt.

Eine weitere Ausführungsform der Erfindung betrifft eine Vorrichtung zur Kunststoffbeschichtung von Strangprofilen mit
- einem Beschichtungsreaktor mit
- zwei den Reaktor gegen den Umgebungsdruck abdichtenden Schleusen,
- einem Quarzfenster zur Einspeisung vom Mikrowellen sowie
- gegebenenfalls Mittel zur Erzeugung und Einspeisung von Mikrowellen, wobei diese Vorrichtung insoweit aus der DE-A-31 47 986 bekannt ist, jedoch darüber hinaus durch einen ECR-Magenten gekennzeichnet ist, der das durch eine der Schleusen eintretende und durch die andere Schleuse austretende Strangprofil geschlossen umgibt.

Gemäß einer speziellen Ausführungsform ist der ECR-Magnet ringförmig ausgebildet.

Das Quarzfenster kann gewölbe-, dom- oder kalottenförmig ausgebildet sein.

Bezüglich bekannter Vorrichtungen zur kontinuierlichen Kunststoffbeschichtung sei auf die von Shine-etsu Chemical Industry Co., Ltd. vertriebenen Vorrichtungen verwiesen. In der deutschen Patentanmeldung P 37 38 352.3 ist ferner eine Vorrichtung beschrieben, bei der mit Hilfe von Mitteln zur Erzeugung und Zuleitung von Mikrowellen ein Gasplasma erzeugt wird. Auf den Offenbarungsgehalt dieses Stands der Technik wird hier voll Bezug genommen.

Einzelheiten zur Plasmapolymerisation, insbesondere zur Wahl von geeigneten Monomeren zur Kunststoffbeschichtung von Strangprofilen, lassen sich den deutschen Patentanmeldungen 31 47 986.3, 32 44 391.9, 33 16 693.5 und 34 08 837.7 entnehmen.

Nachstehend wird die Erfindung mit zwei Figuren an einem Beispiel näher erläutert. Es zeigen:
Figur 1 eine schematische zum Teil geschnittene Ansicht einer erfindungsgemäßen Vorrichtung sowie
Figur 2 einen Schnitt der Vorrichtung nach Figur 1.

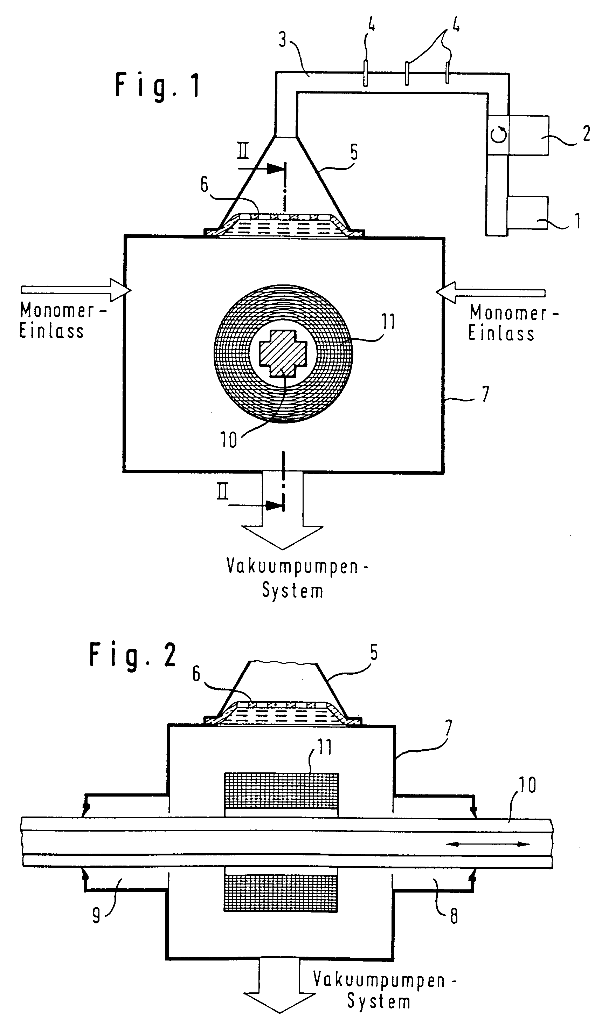

Nach Figur 1 werden mit einem Magnetron 1 Mikrowellen einer Frequenz von beispielsweise 2,45 GHz erzeugt, die mit Hilfe eines Hohlleiters 3 und eines Zirkulators 2 einem Hornstrahler 5 zugeführt werden. Die erzeugten Mikrowellen treten vom Hornstrahler 5 durch einen Quarzdom 6 in einen Reaktor 7 ein. Mit Hilfe von Abstimmelementen 4 werden die Mikrowellen resonanzmäßig auf den Reaktor 7 abgestimmt. Der Reaktor 7 ist in nicht näher dargestellter Weise an eine nicht dargestellte Vakuumpumpe angeschlossen, so daß in dem Reaktor 7 ein für die Ausbildung eines Gasplasmas erforderlicher Unterdruck eingestellt werden kann. Der Reaktor ist ferner mit einem oder mit mehreren nicht näher dargestellten Einlässen für das gewünschte Monomere versehen. In dem Reaktor ist ein ECR-Magnet (Solenoid) 11 angeordnet, dessen Wicklungen einen Ring derart bilden, daß sich in der Bohrung bzw. im Innern dieses Ringes ECR-Bedingungen einstellen lassen, so daß das Monomere nur in dieser Bohrung polymerisiert. Nach Figur 2 ist der Reaktor 7 mit Schleusen 8, 9 versehen, die mit der Bohrung des ECR-Magneten 11 fluchten. Die Schleusen 8, 9 können in nicht näher dargestellter Weise als Lippendichtungen ausgebildet sein, mit deren Hilfe beispielsweise ein Strangprofil 10 für die Herstellung von Fensterrahmen in den Reaktor 7 eingeführt, berührungslos durch die Bohrung des ECR-Magneten 11 geführt und durch die der Einführungsschleuse 8 gegenüberliegende Schleuse 9 ausgeschleust werden kann.

Mit Hilfe der in den Figuren 1 und 2 wiedergegebenen Vorrichtung wurde Poly-(methylmethacrylat) auf einem Aluminiumprof il mit kreuzförmigem Querschnitt abgeschieden (Beispiel 1).

Das vorstehende Beispiel wurde mit Hexamethyldisiloxan (HMDSO) wiederholt (Beispiel 2).

## Patentansprüche

1. Verfahren zur Kunststoffbeschichtung von Strangprofilen, bei dem man das Strangprofil (10) kontinuierlich durch einen Reaktor (7) führt, in dem ein Monomeres mit Hilfe eines durch Mikrowellen erzeugten Plasmas polymerisiert und auf dem Strangprofil (10) abgeschieden wird, dadurch ***gekennzeichnet,*** daß man das Strangprofil (10) in dem Reaktor (7) durch ein gürtelförmiges Plasma führt, das man mit Hilfe eines stationären ECR-Magneten (11) ausbildet, der das kontinuierlich bewegte Strangprofil (10) geschlossen umgibt.

2. Vorrichtung zur Kunststoffbeschichtung von Strangprofilen mit
- einem Beschichtungsreaktor (7) mit
- zwei den Reaktor (7) gegen den Umgebungsdruck abdichtenden Schleusen (8, 9),
- einem Quarzfenster (6) zur Einspeisung von Mikrowellen sowie
- fakultativen Mitteln (1 bis 5) zur Erzeugung und Einspeisung von Mikrowellen, ***gekennzeichnet*** durch einen ECR-Magneten (11), der das durch eine der Schleusen (8, 9) eintretende und durch die andere Schleuse (8, 9) austretende Strangprofil (10) geschlossen umgibt.

3. Vorrichtung nach Anspruch 2, dadurch ***gekennzeichnet,*** daß der ECR-Magnet (11) ringförmig ausgebildet ist.

4. Vorrichtung nach Anspruch 2 oder 3, dadurch ***gekennzeichnet,*** daß das Quarzfenster (6) gewölbe-, dom- oder kalottenförmig ausgebildet ist.

## Claims

1. Process for the resin-coating of extrusions, in which the extrusion (10) is passed continuously through a reactor (7), in which a monomer is polymerised using a plasma obtained by microwaves, and deposited on the extrusion (10), characterized in that the extrusion (10) in the reactor (7) is passed through a belt-shaped plasma formed using a stationary ECR magnet (11) which closedly surrounds the continuously moving extrusion (10).

2. Apparatus for the resin-coating of extrusions, having
- a coating reactor (7)
- two valves (8, 9) sealing the reactor (7) against ambient pressure,
- a quartz window (6) for the introduction of microwaves and
- optionally means (1 to 5) for the production and introduction of microwaves, characterized by an ECR magnet (11) which closedly surrounds the extrusion (10) entering via one of the valves (8, 9) and exiting via the other valve (8, 9).

3. Apparatus according to claim 2, characterized in that the ECR magnet (11) is annular.

4. Apparatus according to claim 2 or 3, characterized in that the quartz window (6) is arch-, dome- or cup-shaped.

## Revendications

1. Procédé pour revêtir de matière plastique des profilés extrudés, dans lequel on fait passer le profilé extrudé (10) de façon continue dans un réacteur (7) dans lequel un monomère est polymérisé par un plasma produit par des micro-ondes et est déposé sur le profilé extrudé (10), caractérisé en ce que l'on fait passer le profilé extrudé (10) dans le réacteur (7) à travers une ceinture de plasma formée à l'aide d'un aimant permanent ECR (11) qui entoure complètement le profilé extrudé (10) se déplaçant de façon continue.

2. Dispositif pour revêtir de matière plastique des profilés extrudés, comportant
- un réacteur de revêtement (7), comprenant
- deux sas (8, 9) rendant le réacteur (7) étanche vis-à-vis de la pression ambiante,
- une fenêtre de quartz (6) pour le passage des micro-ondes, ainsi que
- des moyens (1 à 5) facultatifs pour produire et distribuer des micro-ondes,
caractérisé par un aimant ECR (11) qui entoure complètement le profilé extrudé (10) entrant par l'un des sas (8, 9) et sortant par l'autre sas (8, 9).

3. Dispositif selon la revendication 2, caractérisé en ce que l'aimant ECR (11) est annulaire.

4. Dispositif selon la revendication 2 ou 3, caractérisé en ce que la fenêtre de quartz (6) est bombée ou a une forme de dôme ou de calotte.
